Europäisches Patentamt

European Patent Office

Office européen des brevets

(11) Publication number: **0 270 883 B1**

# EUROPEAN PATENT SPECIFICATION

(45) Date of publication of patent specification: **11.03.92**   (51) Int. Cl.⁵: **G21C 3/32**, G21C 7/00

(21) Application number: **87116959.5**

(22) Date of filing: **17.11.87**

(54) BWR fuel assembly having hybrid fuel design.

(30) Priority: **09.12.86 US 939929**

(43) Date of publication of application:
**15.06.88 Bulletin 88/24**

(45) Publication of the grant of the patent:
**11.03.92 Bulletin 92/11**

(84) Designated Contracting States:
**CH ES IT LI SE**

(56) References cited:
**DE-A- 3 122 145**
**US-A- 3 147 191**
**US-A- 3 194 743**
**US-A- 4 560 532**

(73) Proprietor: **WESTINGHOUSE ELECTRIC COR-PORATION**
**Westinghouse Building Gateway Center**
**Pittsburgh Pennsylvania 15222(US)**

(72) Inventor: **Taleyarkhan, Rusi Pesi**
**21-G Murray Court**
**Pittsburgh Pennsylvania 15239(US)**

(74) Representative: **Patentanwälte Dipl.-Ing. R. Holzer Dipl.-Ing. (FH) W. Gallo**
**Ludwigstrasse 26**
**W-8900 Augsburg(DE)**

## Description

The present invention relates generally to nuclear reactors and, more particularly, to a fuel assembly for a nuclear reactor of the boiling water type (BWR).

Nuclear fission occurring in a nuclear reactor during operation thereof results in the release of large amounts of energy dissipated in the reactor's fuel elements as heat which is removed from the latter by means of a coolant/moderator passed over their surfaces in heat exchange relationship therewith, and which heat is then extracted from the coolant/moderator for the purpose of being utilized in performing useful work.

In nuclear reactors generally, a plurality of fuel rods is grouped together as part of a fuel assembly, and a plurality of such fuel assemblies is arranged in a matrix to form the nuclear reactor core capable of self-sustained nuclear fission reaction. The core is submersed in a flowing liquid, such as light water, which serves both as the coolant and as a neutron moderator.

In a typical BWR fuel assembly, a bundle of fuel rods arrayed N by N is subdivided into several (usually four) separate mini-bundles by a central water-cross, the fuel rods in each mini-bundle being supported in laterally spaced relationship with respect to each other by means of support grids, also known as spacers, spaced from each other axially along the associated fuel rod mini-bundle. The mini-bundles of the fuel assembly are surrounded by an outer tubular flow channel of generally rectangular cross-section, and which flow channel extends along substantially the whole length of the fuel assembly and interconnects a top nozzle with a bottom nozzle, the latter fitting into a reactor-core support plate and serving as an inlet for coolant/moderator flow into the fuel assembly. Such BWR fuel assembly is disclosed in U.S.-A 4,560,532, for example.

Operation of a nuclear reactor at high power density across its core is desired from the standpoint of operating efficiency. However, there are practical limits affecting the power density that can be maintained, namely, fuel and reactor structural material temperature limits, and coolant temperature and pressure limits. One possible consequence of operating a reactor core so as to approach any of these limits in any region of the core is fuel pellet-and-cladding interaction (PCI) which can result in failure of the fuel-rod cladding, a problem discussed, along with some possible solutions thereto, in U.S.-A-3,147,191.

In an endeavor to avoid PCI-related fuel rod failure, it has been proposed recently to increase the number of fuel rods employed in each fuel assembly, thereby to decrease the power generated per rod. However, it has been found that increasing the $4 \times 4$ fuel-rod array in each mini-bundle of a BWR fuel assembly to a $5 \times 5$ fuel-rod array, for instance, leads to a drastic reduction in bundle-inlet orificing for hydraulic compatibility with existing BWR reload fuel. This leads to unacceptable degradation in the stability performance of the $5 \times 5$ array, arising due to the presence of increased wetted area from the water-cross, as compared to BWR fuel assemblies with conventional open-lattice fuel designs, wetted area from the water-cross in this context meaning the additional flow frictional area due to the cold walls within the fuel assembly.

It is the principal object of the invention to provide an improved BWR fuel design for avoiding the potential PCI constraints and failures without giving rise to unacceptable side effects.

The invention accordingly resides in a nuclear fuel assembly comprising a tubular outer flow channel, a hollow water-cross disposed within the outer flow channel and extending axially therethrough, said hollow water-cross dividing the interior of the outer flow channel into several compartments, and cladded rod-type nuclear fuel disposed within the various compartments in spaced relationship with respect to the outer flow channel and the water-cross, characterized by cladded plate-type thermally fissile nuclear fuel attached to outer surfaces of said water-cross.

By adding the clad plate-type fuel attached to the water-cross, the power generation within the fuel assembly is distributed between the existing rod-type fuel and the plate-type fuel on the water-cross so that the power generation per fuel element is reduced without increasing the number of fuel rods and, hence, without degrading the hydraulic stability performance of the fuel assembly. This hybrid approach to fuel design transforms a relative disadvantage (i.e. wetted surface due to unheated water-cross panels) into a sizable advantage overcoming the problem of PCI-related fuel failure.

In the fuel assembly embodying the invention, the plate-type nuclear fuel is in the form of plates each comprising an inner sheet of thermally fissile nuclear fuel disposed adjacent the respective outer surfaces of the water-cross, and an outer sheet of cladding which is disposed adjacent the inner sheet and is attached to the water-cross in a manner sealingly enclosing the inner sheet between the adjacent water-cross surfaces and the outer sheet of cladding, the latter preferably having a peripheral portion thereof sealingly attached to the water-cross. Each of the fuel plates is shaped to conform in contour to the water-cross surfaces to which it is attached. Preferably, the plate-type nuclear fuel is substantially coextensive in length with the rod-type nuclear fuel, and it is substantially coextensive in width with, and shorter in length than, said water-cross.

A preferred embodiment of the invention will now be described, by way of example only, with reference to the accompanying drawings, in which:-

Figure 1 is a vertically foreshortened elevational view of a BWR nuclear fuel assembly, with parts broken away and sectioned for clarity;

Fig. 2 is an enlarged top plan view of the fuel assembly, as seen along line 2--2 of Fig. 1;

Fig. 3 is an enlarged bottom plan view of the fuel assembly, as seen along line 3--3 of Fig. 1;

Fig. 4 is a cross-sectional view taken along line 4--4 of Fig. 1 and showing the fuel assembly as embodying the invention;

Fig. 5 is a cross-sectional view of the fuel assembly similar to Fig. 4 but taken along line 5--5 of Fig. 1;

Fig. 6 is a perspective view, in vertically foreshortened form, of the water-cross alone; and

Fig. 7 is a cross-sectional view taken along line 7--7 of Fig. 6.

In the following description, like reference characters designate like or corresponding parts throughout the several view of the drawings, and terms such as "forward", "rearward", "left", "right", "upward", "downward", and the like are used as words of convenience and not to be construed as limiting terms.

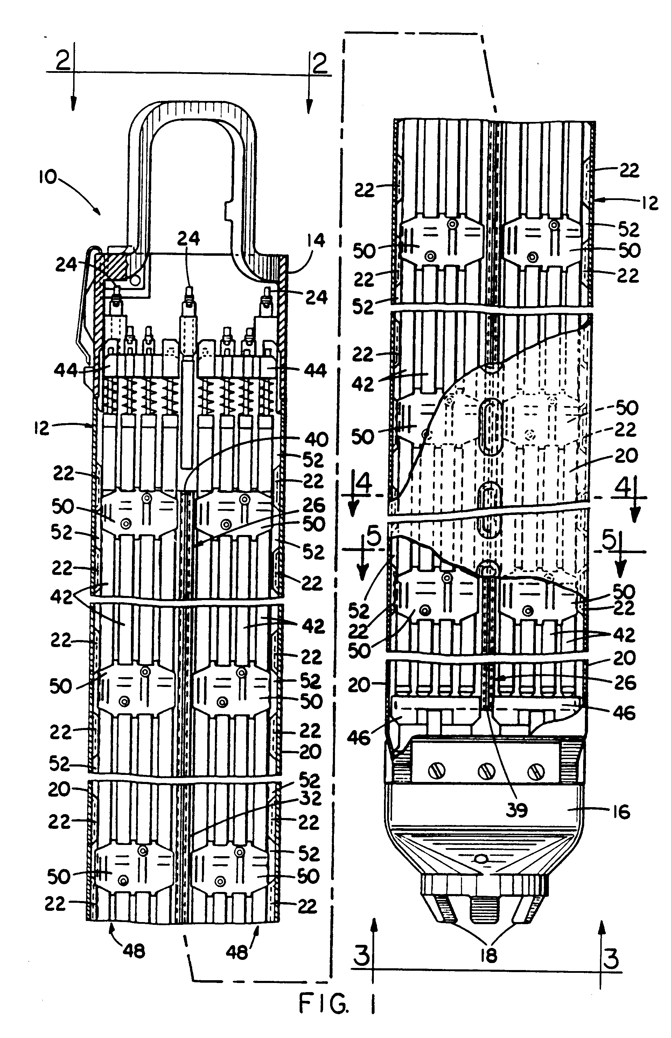

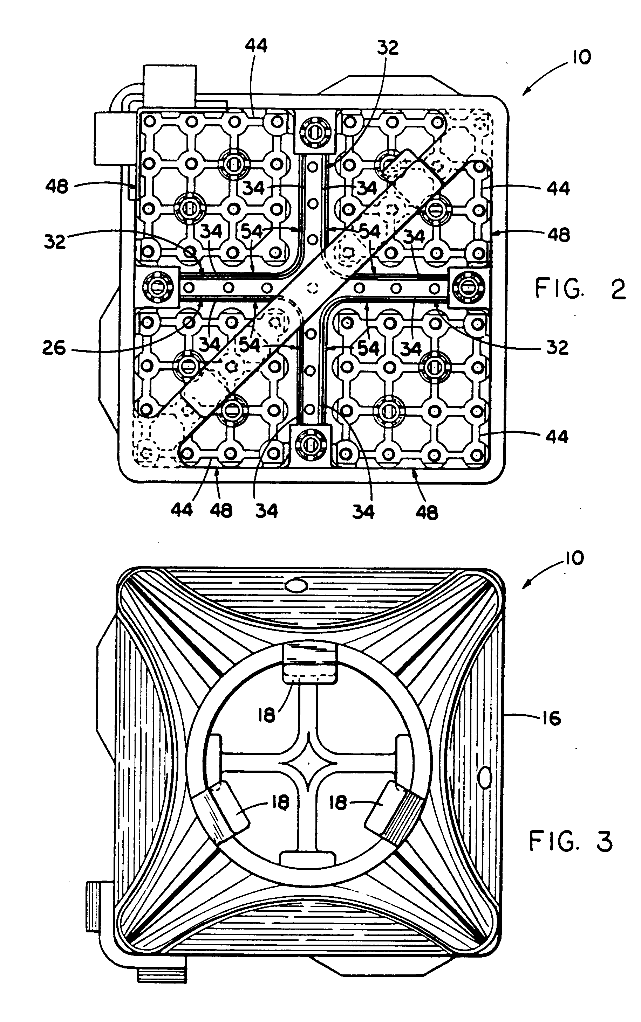

Referring to the drawings, and particularly to Figs. 1 to 3 thereof, the nuclear fuel assembly illustrated therein and generally designated 10 is for use in a nuclear power reactor of the boiling water type. The fuel assembly 10 includes an elongate, tubular outer flow channel 12 which extends substantially for the full length of the fuel assembly 10 and interconnects an upper support fixture or top nozzle 14 with a lower base or bottom nozzle 16. The bottom nozzle 16 which serves as an inlet for coolant flow into the outer flow channel 12 has legs 18 for guiding it into a reactor core support plate (not shown) or into fuel storage racks located, for example, in a spent-fuel pool.

The outer flow channel 12, preferably formed of a zirconium alloy known as Zircaloy and of generally rectangular cross-section, consists of four interconnected walls 20 each extending substantially at right angles with respect to the walls 20 adjoining it, and having on its inner surface a plurality of structural ribs 22 which are spaced apart in a vertical row located about midway between the lateral ends of the respective wall 20. Above the rows of structural ribs 22, the walls 20 have affixed thereto upwardly extending attachment studs 24 which are used to connect the top nozzle 14 to the outer flow channel 12.

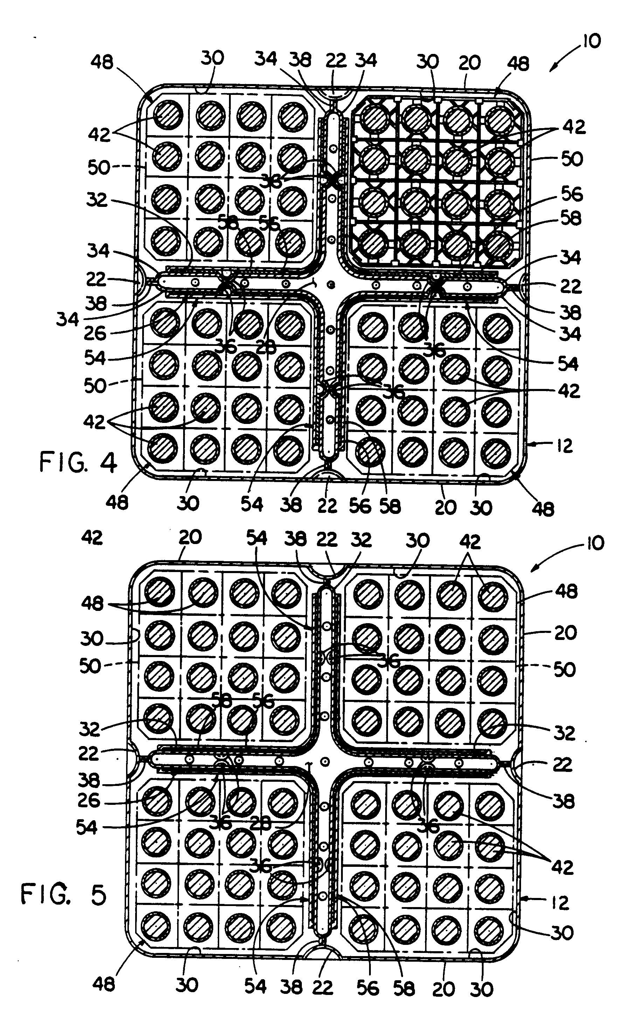

As seen from Figs. 1, 2 and 4, the fuel assembly 10 includes further a hollow water cross generally designated 26. This water cross 26 extends axially through the outer flow channel 12, thereby dividing same into four separate compartments 30, and it defines an inner coolant/moderator flow channel 28 of generally cruciform cross-section. The water cross 26 is formed of four elongate, generally L-shaped metal angles or sheet members 34 arranged and joined, e.g. welded, together along their outer ends so as to form four hollow, radial panels 32, the walls of which are maintained in the desired parallel spaced relationship with respect to each other by dimples 36 formed, one opposite another, on the panel-defining leg portions of the sheet members 34 and joined, e.g. welded, together at their apices (see Fig. 4).

The hollow water cross 26 is attached to the walls 20 of the outer flow channel 12, preferably by having the outer edges 38 of its panels 32 joined, e.g. welded, to the structural ribs 22 of the outer channel walls 20, and it has an inlet 39 at its lower end and an outlet 40 at its upper end, both the inlet 39 and the outlet 40 communicating with the flow channel 28 within the water cross.

Disposed within the outer flow channel 12 is a bundle of fuel rods 42 arranged in an N × N array and divided by the water cross 26 into four equal mini-bundles. In the embodiment illustrated, the fuel-rod bundle consists of sixty-four fuel rods arrayed 8 × 8 and divided, by the water cross 26, into four mini-bundles each consisting of sixteen fuel rods arrayed 4 × 4. The fuel rods 42 of each mini-bundle are connected at their opposite ends to upper and lower tie plates 44, 46 and are firmly held in parallel spaced relationship with respect to each other by means of grids or spacers 50 spaced apart axially along the fuel rod mini-bundle. Each mini-bundle of fuel rods 42, together with the tie plates 44,46 and the support and spacer grids 50 associated therewith, form a fuel-rod subassembly 48 located in the respective compartment 30 within the outer flow channel 12. The lower and upper tie plates 44,46 of each fuel-rod subassembly 48 have flow openings defined therethrough to permit coolant/moderator fluid to enter and exit the subassembly. The various compartments 30 in the fuel assembly are in fluid flow communication with each other through the gaps 52 between the structural ribs 22 so that there is pressure equalization between the compartments and, consequently, minimal risk of thermal hydrodynamic instability among the various fuel-rod subassemblies 48. The BWR fuel assembly 10 as described thus far is known, e.g. from the above-mentioned US-PS 4,560,532 to which reference may be had for a more detailed description, if desired.

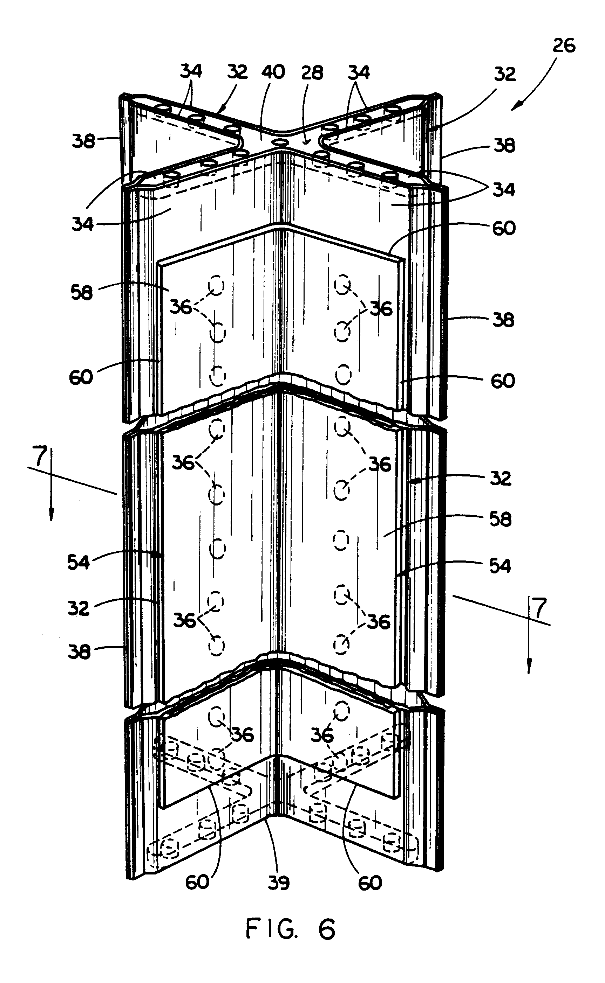

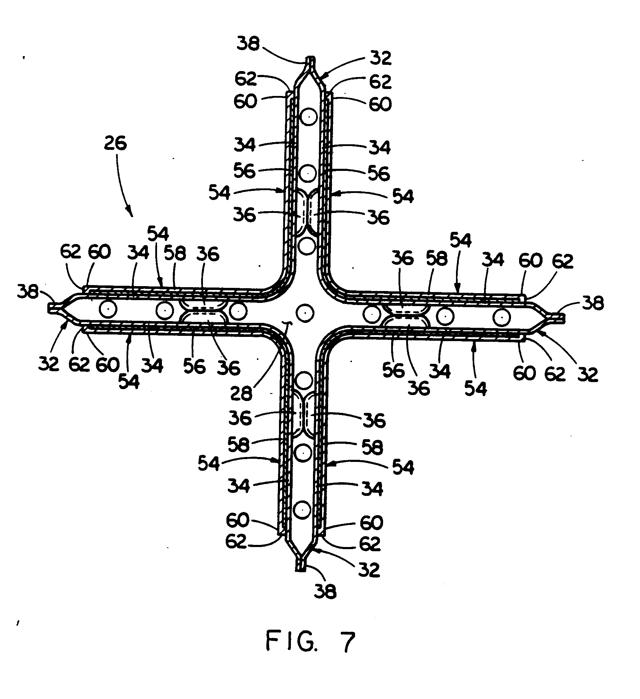

The hybrid fuel design embodying the invention will now be described with particular reference to Figs. 4 to 7. As seen therefrom, this hybrid fuel design, or hybrid fuel-element arrangement, comprises cladded-rod type nuclear fuel in form of the fuel rods 42 arrayed as mini-bundles in the respective compartments 30 and spaced laterally both from the walls 20 of the outer flow channel 12 and from the radial panels 32 of the water cross 26, and cladded-plate type nuclear fuel in the form of elongate fuel plates 54 attached to the outer surfaces of the radial panels 32 of the water cross 26. With this hybrid arrangement of thermally fissile fuel, power generation within the fuel assembly 10 is distributed between the regular fuel rods 42 and the fuel plates 54 added in accordance with the invention; thus, there is less power generation per fuel element (about 20% based upon a 25% increase in heated perimeter) than in a conventional BWR fuel assembly employing only fuel rods, and consequently rarely a risk of pellet-and-cladding interaction failure. Moreover, this advantage is obtained without increasing the number of fuel rods and, hence, without impairing nuclear/hydraulic stability.

Each fuel plate 54 is shaped to conform in contour toe the adjacent water-cross surface to which it is attached, each fuel plate being substantially coextensive in length with the fuel rods 42, and substantially coextensive in width with, but shorter in length than, the adjacent water-cross panel 32. Each fuel plate 54 comprises a bent (right-angled) inner sheet 56 of thermally fissile nuclear fuel disposed next to the adjacent outer surfaces of two of the water-cross panels 32, and a bent (right-angled) outer sheet 58 of cladding disposed next to the inner sheet 56 at the side thereof distant from the water cross. At its periphery 60, the outer sheet 58 has a rim 62 which is turned inward and by means of which the outer sheet is attached to the adjacent pair of water-cross vanes 32 in a manner such as to sealingly encase the inner sheet 56 of nuclear fuel and thereby prevent direct contact thereof with the coolant/moderator liquid. The nuclear fuel of the inner sheet 56 may be the same composition as the nuclear fuel in the fuel rods 42, e.g. uranium oxide, and the cladding of the outer sheet 58 may be the same composition as the cladding of the fuel rods 42, e.g. zirconium oxide (which may also be the composition of the water cross 26).

## Claims

1. A nuclear fuel assembly comprising a tubular outer flow channel (12), a hollow water-cross (26) disposed within the outer flow channel and extending axially therethrough, said hollow water-cross dividing the interior of the outer flow channel into several compartments (30), and cladded rod-type nuclear fuel (42) disposed within the various compartments (30) in spaced relationship with respect to the outer flow channel and the water-cross, characterized by cladded plate-type thermally fissile nuclear fuel (54) attached to outer surfaces of said water cross (26).

2. A nuclear fuel assembly according to claim 1, characterized in that the plate-type nuclear fuel (54) is substantially coextensive in length with the rod-type nuclear fuel (42).

3. A nuclear fuel assembly according to claim 1 or 2, characterized in that the plate-type nuclear fuel (54) is substantially coextensive in width with, and is shorter in length than, said water-cross (26).

4. A nuclear fuel assembly according to claim 1, 2 or 3, characterized in that the plate-type nuclear fuel (54) is in the form of plates each comprising an inner sheet (56) of thermally fissile nuclear fuel disposed adjacent the respective outer surfaces of the water-cross, and an outer sheet (58) of cladding which is disposed adjacent the inner sheet (56) and is attached to the water-cross in a manner sealingly enclosing said inner sheet (56).

5. A nuclear fuel assembly according to claim 4, characterized in that said outer sheet (58) of cladding has a peripheral portion (60) thereof sealingly attached to the water-cross.

6. A nuclear fuel assembly according to claim 4 or 5, characterized in that each of said plates (54) is shaped to conform in contour to the water-cross surfaces to which it is attached.

## Revendications

1. Assemblage de combustible nucléaire présentant un canal (12) d'écoulement tubulaire extérieur, une croix d'eau (26) creuse disposée dans le canal d'écoulement extérieur et s'étendant axialement dans celui-ci, croix d'eau qui subdivise l'espace intérieur du canal d'écoulement extérieur en plusieurs chambres (30), et du combustible nucléaire (42) en forme de barres enrobées qui est disposé dans les différentes chambres (30) à distance par rapport au canal d'écoulement extérieur et la croix d'eau, caractérisé par le combustible nucléaire (54) thermiquement fissile, en forme de plaques enrobées, qui est fixé aux surfaces extérieures de la croix d'eau (26).

2. Assemblage de combustible nucléaire selon la revendication 1, caractérisé en ce que le combustible nucléaire (54) en forme de plaques possède environ la même extension en longueur que le combustible nucléaire (42) en forme de barres.

3.  Assemblage de combustible nucléaire selon les revendications 1 ou 2, caractérisé en ce que le combustible nucléaire en forme de plaques (54) présente à peu près la même extension en largeur que la croix d'eau (26) et une longueur plus courte que la croix d'eau.

4.  Assemblage de combustible nucléaire selon les revendications 1, 2 ou 3, caractérisé en ce que le combustible nucléaire en forme de plaques (54) se présente sous forme de plaques qui possèdent chacune une couche intérieure (56) en combustible nucléaire thermiquement fissile qui est disposée de manière adjacente à la surface extérieure correspondante de la croix d'eau, et présente une couche d'enrobage (58) extérieure qui est disposée de manière adjacente à la couche intérieure (56) et est reliée avec la croix d'eau de manière à ce que la couche intérieure (56) soit étanchement renfermée.

5.  Assemblage de combustible nucléaire selon la revendication 4, caractérisé en ce qu'une zone périphérique (60) de la couche d'enrobage extérieure (58) est liée à la croix d'eau de manière étanche.

6.  Assemblage de combustible nucléaire selon les revendications 4 ou 5, caractérisé en ce que chaque plaque (54) est formée selon les contours de la surface de la croix d'eau à laquelle elle est fixée.

**Patentansprüche**

1.  Kernbrennelement mit einem rohrförmigen äußeren Strömungskanal (12), einem im äußeren Strömungskanal angeordneten und in diesem axial verlaufenden, hohlen Wasserkreuz (26), welches den Innenraum des äußeren Strömungskanals in mehrere Kammern (30) unterteilt, und mit umhülltem stabförmigem Kernbrennstoff (42), weicher in den verschiedenen Kammern (30) mit Abstand zum äußeren Strömungskanal und zum Wasserkreuz angeordnet ist, gekennzeichnet durch umhüllten plattenförmigen thermisch spaltbaren Kernbrennstoff (54), welcher an den Außenflächen des Wasserkreuzes (26) befestigt ist.

2.  Kernbrennelement nach Anspruch 1, dadurch gekennzeichnet, daß der plattenförmige Kernbrennstoff (54) etwa die gleiche Längenausdehnung wie der stabförmige Kernbrennstoff (42) besitzt.

3.  Kernbrennelement nach Anspruch 1 oder 2, dadurch gekennzeichnet, daß der plattenförmige Kernbrennstoff (54) etwa die gleiche Breitenausdehnung wie das Wasserkreuz (26) und eine kürzere Länge als das Wasserkreuz hat.

4.  Kernbrennelement nach Anspruch 1, 2 oder 3, dadurch gekennzeichnet, daß der plattenförmige Kernbrennstoff (54) in Form von Platten vorliegt, welche jeweils eine innere Schicht (56) aus thermisch spaltbarem Kernbrennstoff aufweist, welche an der jeweiligen Außenfläche des Wasserkreuzes anliegend angeordnet ist, und eine äußere Umhüllungsschicht (58) aufweist, welche an der inneren Schicht (56) angrenzend angeordnet und derart mit dem Wasserkreuz verbunden ist, daß die innere Schicht (56) dicht eingeschlossen ist.

5.  Kernbrennelement nach Anspruch 4, dadurch gekennzeichnet, daß ein umfänglicher Bereich (60) der äußeren Umhüllungsschicht (58) dicht mit dem Wasserkreuz verbunden ist.

6.  Kernbrennelement nach Anspruch 4 oder 5, dadurch gekennzeichnet, daß jede Platte (54) entsprechend der Kontur der Wasserkreuzoberfläche, an welcher sie befestigt ist, geformt ist.

FIG. 1

FIG. 2

FIG. 3

FIG. 4

FIG. 5

FIG. 6

FIG. 7